# EUROPEAN PATENT APPLICATION

(11) **EP 2 034 732 A1**
(43) Date of publication of application: **11.03.2009**
(21) Application number: 07741207.0
(22) Date of filing: 06.04.2007
(51) Int. Cl.: H04N 7/173, H04B 1/16, H04H 1/00, H04N 5/44, H04N 5/445

(54) **DIGITAL BROADCASTING RECEIVER**

(30) Priority: 05.06.2006 JP 2006155717
(71) Applicant: Panasonic Corporation, Kadoma-shi Osaka 571-8501 (JP)
(72) Inventor: CHOZUI, Sadatoshi, IP Development Center 7 F OBP Panasonic Tower 1-1 Shiromi 2-chome Chuo-ku Osaka-sh Osaka 540-6207 (JP)
(74) Representative: TBK-Patent
(86) International application number: PCT/JP2007/057771
(87) International publication number: WO 2007/141954

(57) **Abstract**

A television receiver includes a TS decoder, an editor, a receiving intensity detector, a determiner, and a service list storage. The TS decoder separates electronic program guide data, service list data, and so on from a transport stream. The receiving intensity detector detects the receiving intensity of a physical channel that is being tuned in to, and determines a receivable hierarchy. The determiner determines whether or not each of services in a service list is receivable on the basis of the results of the determination by the receiving intensity detector, and stores an ID number for specifying the service that has been determined to be receivable in the service list storage. The editor generates electronic program guide data including only the receivable service on the basis of the electronic program guide data separated by the TS decoder and the ID number stored in the service list storage.

## Description

### [Technical Field]

The present invention relates to a digital broadcasting receiver.

### [Background Art]

Generally, digital broadcasting receivers perform channel scans when they are installed, to judge receivable physical channels (see, for example, Patent Document 1). Note that the physical channel is a channel representing a frequency band assigned to each of broadcasting stations.

The digital broadcasting receivers acquire service list data from broadcasting signals at broadcasting stations when they perform channel scans. Note that the service list data is produced for each physical channel. The service list data includes an ID (identification) number for specifying a service broadcast on the physical channel and the name of the service (e.g., a television broadcast, a radio broadcast, and a data broadcast).

Furthermore, the digital broadcasting receivers create channel lists on the basis of the acquired service list data. The channel list is a list of services, received by the digital broadcasting receiver, organized for each physical channel, for example, a program listing. Viewers can view, by selecting desired services from the created channel lists, the services.

In digital broadcasting in Japan, for example, a frequency band of 6 MHz is assigned to each of broadcasting stations. The broadcasting station uses 13 of 14 blocks obtained by equally dividing the bandwidth of 6 MHz to do a broadcast and uses the remaining one block to prevent interference with a broadcast in an adjacent frequency band. Each of the 13 blocks used for the broadcast is hereinafter referred to as a segment.

Furthermore, each of the broadcasting stations can classify the 13 segments into a plurality of hierarchies that differ in modulation systems. Examples of the modulation systems include a 64 QAM (Quadrature Amplitude Modulation) system for generating a broadcasting signal in a high hierarchy having a large amount of transmittable data and a QPSK (Quadrature Phase Shift Keying) system for generating a broadcasting signal in a low hierarchy having a small amount of transmittable data.
[Patent Document 1] JP 2004-282211 A

### [Disclosure of the Invention]

### [Problems to be solved by the Invention]

Here, a broadcasting signal in a high hierarchy is weak in error resistance, and a broadcasting signal in a low hierarchy is strong in error resistance. When a digital broadcasting receiver is installed in a place where a receiving environment is bad, for example, a place farther away from a transmission antenna (a television tower) that transmits a broadcasting signal or a place where high-rise buildings are closely packed, the digital broadcasting receiver cannot, in some cases, receive the broadcasting signal in the high hierarchy.

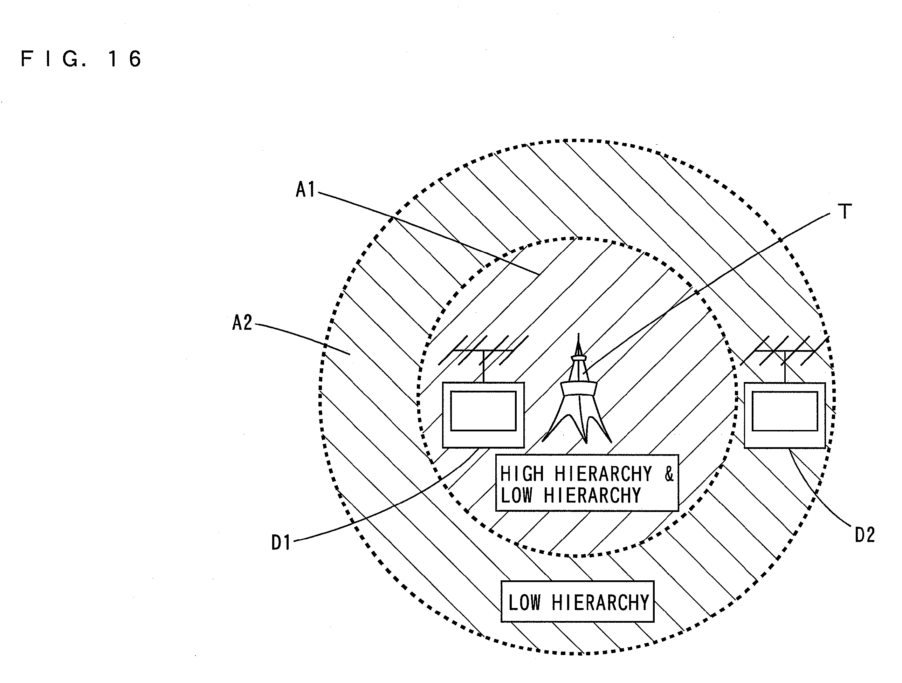

Fig. 16 is a diagram showing the relationship between a place where a digital broadcasting receiver is installed and a receiving area of a broadcasting signal. In Fig. 16, a first digital broadcasting receiver D1 is installed in a first area A1 within a predetermined distance from a television tower T, and a second digital broadcasting receiver D2 is installed in a second area A2 outside the first area A1.

Broadcasting signals in a low hierarchy and a high hierarchy are transmitted from the television tower T using two different modulation systems. The broadcasting signal in the high hierarchy and the broadcasting signal in the low hierarchy can be received in the first area A1, while only the broadcasting signal in the low hierarchy can be received in the second area A2.

In a state as shown in Fig. 16, when service list data is transmitted with the service list data multiplexed on the broadcasting signal in the high hierarchy, information relating to the broadcasting signal (service) in the low hierarchy cannot be acquired, though the digital broadcasting receiver D2 is receiving the broadcasting signal (service) in the second area A2.

Generally, each of broadcasting stations transmits service list data with the service list data multiplexed on a broadcasting signal in a low hierarchy. This allows a digital broadcasting receiver installed in a place where a receiving environment is bad to also stably acquire the service list data.

ID numbers for specifying all services that are broadcast by each of the broadcasting stations and the types thereof are listed in the service list data. Even in a digital broadcasting receiver that cannot receive the broadcasting signal in the high hierarchy, therefore, the service broadcast in the high hierarchy is incorporated into a channel list. When an electronic program guide (EPG) is displayed on a screen of the digital broadcasting receiver, for example, therefore, it is displayed with programs that cannot be viewed incorporated therein.

In a conventional digital broadcasting receiver, when the service list data is thus transmitted with the service list data multiplexed on the broadcasting signal in the low hierarchy, services that cannot be actually viewed may, in some case, be included in users' options. This prevents a user from performing a comfortable tuning operation.

### [Means for Solving the Problems]

An object of the present invention is to provide a digital broadcasting receiver that can perform a comfortable tuning operation.
(1) According to an aspect of the present invention, a digital broadcasting receiver that receives a broadcasting signal hierarchically modulated includes a receiver that receives respective broadcasting signals in a plurality of frequency bands, a demodulator that demodulates a transport stream from the broadcasting signal received by the receiver, an extractor that extracts list information of services broadcast in each of the frequency bands from the transport stream demodulated by the demodulator, a hierarchy determiner that determines, on the basis of the state of the broadcasting signal received by the receiver, a receivable hierarchy of the broadcasting signal, a separator that separates the services broadcast in the receivable hierarchy from the list information extracted by the extractor on the basis of the results of the determination by the hierarchy determiner, and a selector that selects, out of the services separated by the separator, the service on the basis of a user's operation.
   In the digital broadcasting receiver, the receiver receives the respective broadcasting signals in the plurality of frequency bands. The demodulator demodulates the transport stream from the broadcasting signal received by the receiver. The extractor extracts the list information of the services broadcast in each of the frequency bands from the transport stream demodulated by the demodulator. The hierarchy determiner determines, on the basis of the state of the broadcasting signal received by the receiver, the receivable hierarchy of the broadcasting signal. The separator separates the receivable services from the list information on the basis of the results of the determination by the hierarchy determiner. The selector selects the service on the basis of the user's operation out of the separated services.
   In this case, the hierarchy determiner determines the receivable hierarchy of the broadcasting signal. Therefore, the separator can separate the receivable services from the list information on the basis of the results of the determination by the hierarchy determiner. Even if the list information is transmitted with the list information multiplexed on the broadcasting signal in a low hierarchy, therefore, it is possible to prevent the digital broadcasting receiver from erroneously recognizing that the unreceivable service out of the services in the list information is receivable.
   Furthermore, the selector can select only the service separated by the separator. Therefore, the unreceivable service is not selected. This allows a time period required to select the service to be shortened.
   As a result of the foregoing, a user can perform a comfortable tuning operation.
(2) The hierarchy determiner may detect the receiving intensity of the broadcasting signal by the receiver as the state of the broadcasting signal, and determine the receivable hierarchy of the broadcasting signal on the basis of the detected receiving intensity.
   In this case, the hierarchy determiner can reliably determine the receivable hierarchy of the broadcasting signal by detecting the receiving intensity of the broadcasting signal.
(3) The hierarchy determiner may detect at least one of the level, the carrier-to-noise ratio, and the error rate of the broadcasting signal received by the receiver, to detect the receiving intensity.
   In this case, the hierarchy determiner can easily and reliably detect the receiving intensity.
(4) The list information may include information relating to the hierarchy in which each of the services is broadcast, and the separator may separate the service broadcast in the receivable hierarchy from the list information on the basis of the information relating to the hierarchy and the results of the determination by the hierarchy determiner.
   In this case, the separator can determine the hierarchy in which each of the services is broadcast on the basis of the information relating to the hierarchy in the list information, and can therefore reliably separate the receivable service.
(5) The list information may include information for specifying each of the services. The digital broadcasting receiver may further include a storage that stores the relationship between the information for specifying the service and the hierarchy, and a determiner that determines the hierarchy in which each of the services is broadcast in the list information on the basis of the relationship stored in the storage, and the separator may separate the service broadcast in the receivable hierarchy from the list information on the basis of the hierarchy, in which each of the services is broadcast, determined by the determiner and the results of the determination by the hierarchy determiner.
   In this case, the determiner determines the hierarchy in which each of the services is broadcast in the list information. Therefore, the separator can reliably separate the receivable service on the basis of the results of the determination by the determiner.
(6) According to another aspect of the present invention, a digital broadcasting receiver that receives a broadcasting signal hierarchically modulated includes a receiver that receives respective broadcasting signals in a plurality of frequency bands, a demodulator that demodulates a transport stream from the broadcasting signal received by the receiver, an extractor that extracts list information of services broadcast in each of the frequency bands and information, relating to each of the services, to the service multiplexed on the broadcasting signal from the transport stream demodulated by the demodulator, a separator that separates the services corresponding to the information relating to the service extracted by the extractor from the list information extracted by the extractor, and a selector that selects, out of the services separated by the separator, the service on the basis of a user's operation.
   In the digital broadcasting receiver, the receiver receives the respective broadcasting signals in the plurality of frequency bands. The demodulator demodulates the transport stream from the broadcasting signal received by the receiver. The extractor extracts the list information of the services broadcast in each of the frequency bands from the transport stream demodulated by the demodulator and the information relating, for each of the services, to the service multiplexed on the broadcasting signal. The separator separates the services corresponding to the information relating to the service extracted by the extractor from the list information. The selector selects the service on the basis of the user's operation out of the separated services.
   In this case, for each of the services, the information relating to the service is transmitted. Therefore, the separator can separate the receivable service from the list information on the basis of the information relating to the service extracted by the extractor. Even if the list information is transmitted with the list information multiplexed on the broadcasting signal in a low hierarchy, therefore, it is possible to prevent the digital broadcasting receiver from erroneously recognizing that the unreceivable service out of the services in the list information is receivable.
   Furthermore, the selector can select only the service separated by the separator. Therefore, the unreceivable service is not selected. This allows a time period required to select the service to be shortened.
   As a result of the foregoing, a user can perform a comfortable tuning operation.
(7) The information relating to the service may be a program map table.
   In this case, the program map table is transmitted for each of the services. When the extractor extracts the program map table, therefore, it can be determined that the corresponding service is receivable. Therefore, the separator can reliably separate the receivable service on the basis of the results of the extraction by the extractor.
(8) The information relating to the service may be an event information table.
   In this case, the event information table is transmitted for each of the services. When the extractor detects the event information table, therefore, it can be determined that the corresponding service is receivable. Therefore, the separator can more reliably separate the receivable service on the basis of the results of the extraction by the extractor.
(9) The information relating to the service may include the program map table and the event information table. The digital broadcasting receiver may further include a receiving state determiner that determines the receiving state of the service. The receiving state determiner may determine that the receiver can receive the service corresponding to the program map table and the event information table and the service is being broadcast when the extractor extracts the program map table and the event information table, and determine that the receiver can receive the service corresponding to the event information table and the broadcasting of the service is stopped when the extractor extracts not the program map table but the event information table.

In this case, the receiving state determiner can determine for each of the receivable services whether the service is being broadcast or the broadcasting thereof is stopped. Therefore, the separator can reliably separate the service whose broadcasting is stopped as a receivable service, and can therefore more reliably separate the receivable service.

### [Effects of the Invention]

According to the prevent invention, the separator separates receivable services out of services in list information. Even if the list information is transmitted with the list information multiplexed on a broadcasting signal in a low hierarchy, therefore, it is possible to prevent the digital broadcasting receiver from erroneously recognizing that the unreceivable service out of the services in the list information is receivable.

Furthermore, the selector can select only the service separated by the separator. Therefore, the unreceivable service is not selected. This allows a time period required to select the service to be shortened.

As a result of the foregoing, a user can perform a comfortable tuning operation.

### [Brief Description of the Drawings]

[FIG. 1] FIG. 1 is a block diagram showing the configuration of a television receiver according to a first embodiment.
[FIG. 2] FIG. 2 is a schematic view showing an example of service list data transmitted from each broadcasting station.
[FIG. 3] FIG. 3 is a flow chart showing a channel scan operation of the television receiver shown in Fig. 1.
[FIG. 4] FIG. 4 is a block diagram showing the configuration of a television receiver according to a second embodiment.
[FIG. 5] FIG. 5 is a diagram showing an example of service list data transmitted from each broadcasting station.
[FIG. 6] FIG. 6 is a schematic view showing an example of by-ID hierarchical information.
[FIG. 7] FIG. 7 is a flow chart showing a channel scan operation of the television receiver shown in Fig. 4.
[FIG. 8] FIG. 8 is a block diagram showing the configuration of a television receiver according to a third embodiment.
[FIG. 9] FIG. 9 is a schematic view showing an example of a receiving list in an initial state.
[FIG. 10] FIG. 10 is a schematic view showing an example of a receiving list whose receiving state has been changed.
[FIG. 11] FIG. 11 is a flow chart showing a channel scan operation of the television receiver shown in Fig. 8.
[FIG. 12] FIG. 12 is a block diagram showing the configuration of a television receiver according to a fourth embodiment.
[FIG. 13] FIG. 13 is a flow chart showing a channel scan operation of the television receiver shown in Fig. 12.
[FIG. 14] FIG. 14 is a block diagram showing the configuration of a television receiver according to a fifth embodiment.
[FIG. 15] FIG. 15 is a schematic view showing an example of a receiving list in an initial state in a fifth embodiment.
[FIG. 16] FIG. 16 is a diagram showing the relationship between a place where a digital broadcasting receiver is installed and a receiving area of a broadcasting signal.

### [Best Mode for Carrying out the Invention]

The embodiments of the present invention will be described in detail referring to the drawings. The embodiments below describe a television receiver corresponding to digital broadcasting in Japan.

Note that a frequency band of 6 MHz is assigned to each of broadcasting stations in Japan. Each of the broadcasting stations does a broadcast using 13 of 14 blocks obtained by equally dividing the assigned frequency band of 6 MHz and uses the remaining one block to prevent interference with a broadcasting signal in an adjacent frequency band. Each of the above-mentioned 13 blocks used for the broadcast is hereinafter referred to as a segment. Each of the frequency bands respectively assigned to the broadcasting stations is referred to as a physical channel.

Furthermore, each of the broadcasting stations can classify the above-mentioned 13 segments into a plurality of hierarchies that differ in modulation systems. Examples of the modulation systems include a 64 QAM (Quadrature Amplitude Modulation) system for generating a broadcasting signal in a high hierarchy having a large amount of transmittable data and a QPSK (Quadrature Phase Shift Keying) system for generating a broadcasting signal in a low hierarchy having a small amount of transmittable data. In the following description, description is made of a case where each of the broadcasting stations does a broadcast in two hierarchies, i.e., a low hierarchy and a high hierarchy.

Each of the broadcasting stations shall transmit service list data with the service list data multiplexed on the broadcasting signal in the low hierarchy. Note that the service list data is generated for each of the physical channels. The service list data include an ID (identification) number for specifying a service broadcast on each of the physical channels and the name of the service (e.g., a television broadcast, a radio broadcast, and a data broadcast). The details of the service list data will be described later.

In the digital broadcasting, each of the broadcasting stations can multiplex a plurality of services on one broadcasting signal. Therefore, the plurality of services can be provided by one of the physical channels.

### (1) First Embodiment

### (a) Configuration of television receiver

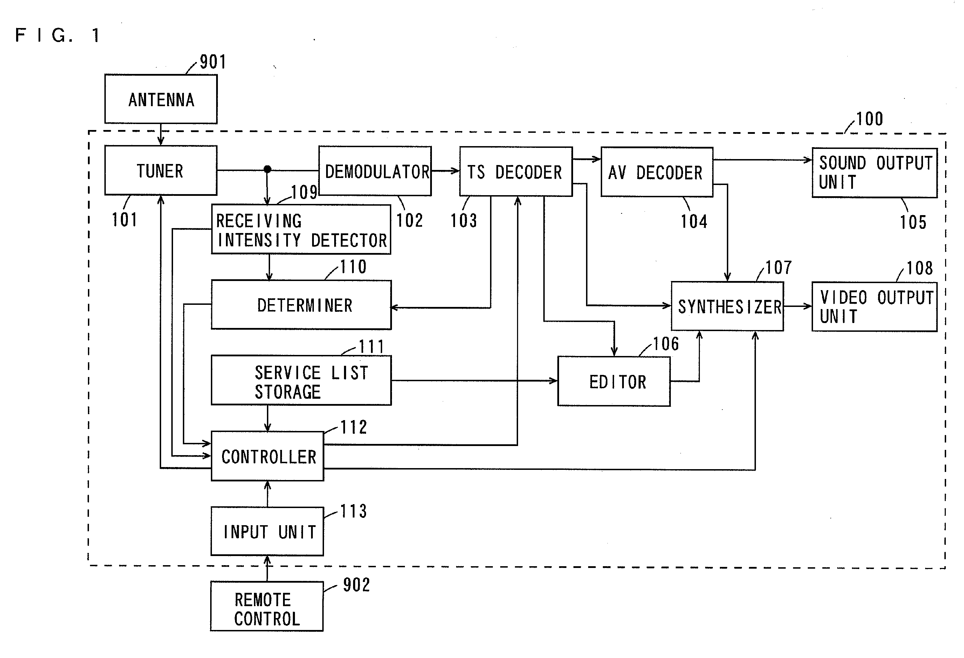

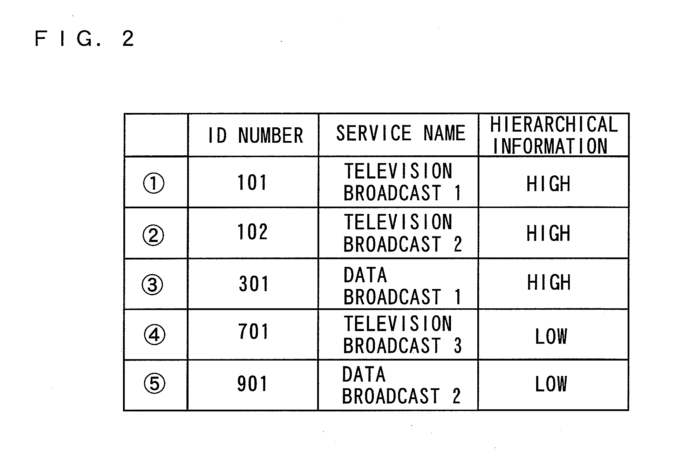

Fig. 1 is a block diagram showing the configuration of a television receiver according to a first embodiment of the present invention. Fig. 2 is a schematic view showing an example of service list data transmitted from each of broadcasting stations. Fig. 2 shows service list data from a broadcasting station (physical channel) that broadcasts five services.

As shown in Fig. 1, a television receiver 100 according to the present embodiment includes a tuner 101, a demodulator 102, a TS (Transport Stream) decoder 103, an AV (Audio Visual) decoder 104, a sound output unit 105, an editor 106, a synthesizer 107, a video output unit 108, a receiving intensity detector 109, a determiner 110, a service list storage 111, and a controller 112.

As shown in Fig. 2, in the present embodiment, service list data includes an ID number for specifying each of services, the name of the service, and hierarchical information. Note that the hierarchical information represents a hierarchy in which the service is broadcast.

As shown in Fig. 1, a plurality of digital broadcasting signals (hereinafter abbreviated as broadcasting signals) is inputted to the tuner 101 from an antenna 901. The tuner 101 tunes in to one physical channel in accordance with a tuning signal outputted from the control unit 112, described later, and outputs a broadcasting signal of the physical channel to the demodulator 102.

The demodulator 102 demodulates the broadcasting signal outputted from the tuner 101, and generates a transport stream conforming to an MPEG (Moving Picture Experts Group)-2 Standard. Furthermore, the demodulator 102 error-corrects the generated transport stream, and outputs the error-corrected transport stream to the TS decoder 103.

Although one tuner 101 and one demodulator 102 are illustrated in Fig. 1, a tuner 101 and a demodulator 102 corresponding to a broadcasting signal in a high hierarchy and a tuner 101 and a demodulator 102 corresponding to a broadcasting signal in a low hierarchy are actually provided because each of the broadcasting stations does a broadcast using two modulation systems in this example.

The TS decoder 103 separates a sound stream, a video stream, electric program guide (EPG) data, data broadcast-related data, service list data (see Fig. 2), and so on from the transport stream outputted from the demodulator 102.

The TS decoder 103 outputs the separated electronic program guide data to the editor 106, outputs the separated data broadcast-related data to the synthesizer 107, and outputs the separated service list data to the determiner 110. Furthermore, the TS decoder 103 outputs from the separated sound stream and video stream a sound stream and a video stream corresponding to a service designated by a designation signal outputted from the controller 112, described later, to the AV decoder 104.

The AV decoder 104 (Fig. 1) decodes the sound stream and the video stream that are outputted from the TS decoder 103, to generate sound data and video data. Furthermore, the AV decoder 104 outputs the generated sound data to the sound output unit 105, and outputs the generated video data to the synthesizer 107.

The sound output unit 105 includes a sound output device such as a speaker, and outputs the sound data outputted from the AV decoder 104 as a sound.

The editor 106 edits the electronic program guide data outputted from the TS decoder 103 on the basis of an ID number stored in the service list storage 111, described later, and outputs the edited electronic program guide data to the synthesizer 107. Specifically, the editor 106 generates the electronic program guide data including only a service corresponding to the ID number stored in the service list storage 111.

The synthesizer 107 synthesizes, when a synthetic signal, described later, is outputted from the controller 112, the video data outputted from the AV decoder 104 and data designated by the synthetic signal (the data broadcast-related data outputted from the TS decoder 103 or the electronic program guide data outputted from the editor 106), and outputs the synthesized data (hereinafter referred to as synthetic data) to the video output unit 108. Furthermore, the synthesizer 107 outputs the video data outputted from the AV decoder 104 as it is to the video output unit 108 when the synthetic signal is not outputted from the controller 112.

The video output unit 108 includes a display device such as a liquid crystal display panel or a plasma display panel, and displays the synthetic data or the video data outputted from the synthesizer 107 as a video. Note that when the synthetic data is displayed as a video, an electronic program guide or the like is presented by OSD (On Screen Display) on the display device.

The receiving intensity detector 109 determines whether or not the broadcasting signal of the physical channel that is being tuned in to by the tuner 101 is being received. Specifically, the receiving intensity detector 109 determines that the broadcasting signal that is being tuned in to by the tuner 101 is being received when it detects the broadcasting signal outputted from the tuner 101, while determining that the broadcasting signal that is being tuned in to by the tuner 101 is not being received when it cannot detect the broadcasting signal outputted from the tuner 101.

The receiving intensity detector 109 outputs, when it determines that the broadcasting signal of the physical channel that is being tuned in to by the tuner 101 is not being received, a first notification signal for notifying the controller 112 of the results of the determination. Furthermore, the receiving intensity detector 109 detects, when it determines that the broadcasting signal of the physical channel that is being tuned in to by the tuner 101 is being received, the receiving intensity of the broadcasting signal. Note that the receiving intensity can be detected by measuring the level of the broadcasting signal, for example.

The determiner 110 determines whether or not each of the services in the service list data outputted from the TS decoder 103 is receivable on the basis of the detected receiving intensity. The details will be described later.

Furthermore, the determiner 110 outputs, when it has determined whether or not all the services in the service list data outputted from the TS decoder 103 are receivable, a second notification signal for notifying the controller 112 of the results of the determination.

The service list storage 111 stores an ID number (see Fig. 2) for specifying the service that has been determined to be receivable by the determiner 110.

The controller 112 includes a storage, and stores the order of physical channels to be scanned when a channel scan is performed. The details of the channel scan will be described later.

The controller 112 generates a tuning signal on the basis of the above-mentioned order stored in the storage or an operation signal outputted from an input unit 113, described later, and outputs the tuning signal to the tuner 101.

Specifically, when the television receiver 100 performs a channel scan, the controller 112 outputs a tuning signal for designating each of the physical channels in accordance with the above-mentioned order stored in the storage. Note that the controller 112 outputs, when the above-mentioned first or second notification signal is outputted from the receiving intensity detector 109 or the determiner 110, a tuning signal for designating the physical channel different from the physical channel that is being tuned in to. The details will be described later.

Furthermore, when the viewer operates a remote control 902 or an operation button of the input unit 113, described later, to select a desired service, the controller 112 outputs a tuning signal for designating the physical channel on which the selected service is broadcast on the basis of the operation signal. Note that the viewer can select the desired service by referring to the electronic program guide displayed on the display device, for example.

The controller 112 generates a designation signal for designating the service selected by the viewer on the basis of the operation signal, and outputs the designation signal to the TS decoder 103. Note that the controller 112 generates the designation signal only for the service specified by the ID number stored in the service list storage 111. When the viewer performs an up-and-down operation with the remote control 902, for example, only the services corresponding to the stored ID numbers are selected in order.

Furthermore, the controller 112 generates a synthetic signal on the basis of the above-mentioned operation signal. When the viewer selects the service, e.g., a data broadcast by operating the remote control 902, the controller 112 outputs a synthetic signal for designating the data broadcast-related data to the synthesizer 107. In this case, the data broadcast-related data is presented by OSD on the display device.

When the viewer attempts to display the electronic program guide by operating the remote control 902, for example, the controller 112 outputs a synthetic signal for designating the electronic program guide data to the synthesizer 107. In this case, the electronic program guide is presented by OSD on the display device.

The input unit 113 includes a remote control signal receiver and an operation button, and generates an operation signal on the basis of a remote control signal transmitted from the remote control 902 or the depression of the operation button, and outputs the operation signal to the controller 112.

Note that the editor 106, the synthesizer 107, the receiving intensity detector 109, the determiner 110, and the controller 112 may be realized by a microcomputer and its control program, or any one or all of them may be realized by hardware such as an electronic circuit.

### (b) Channel scan

A channel scan in the present embodiment will be then described in detail.

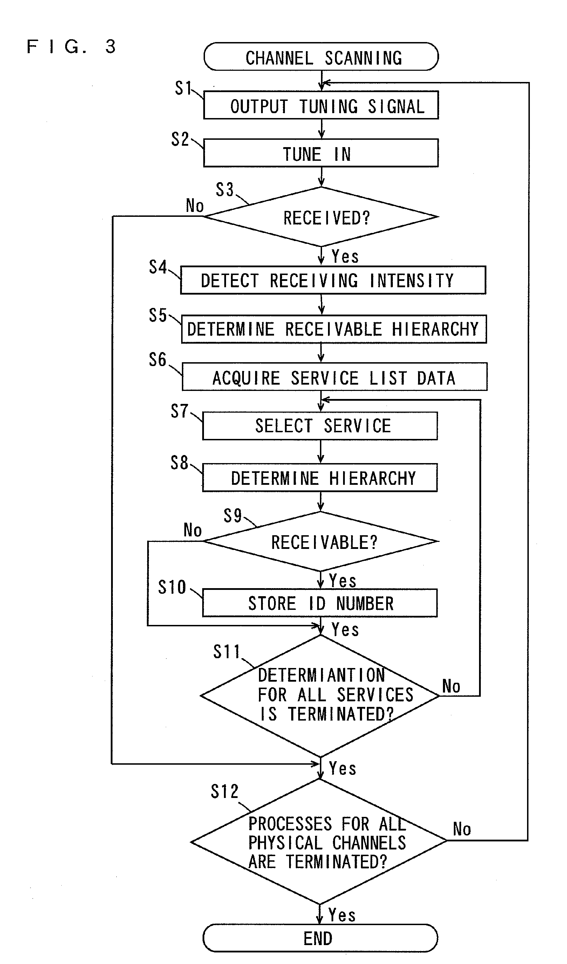

Fig. 3 is a flow chart showing a channel scan operation of the television receiver 100 (Fig. 1).

As shown in Fig. 3, the controller 112 (Fig. 1) first generates a tuning signal for designating a first physical channel on the basis of the order stored in the storage, and outputs the generated tuning signal to the tuner 101 (Fig. 1).

Then, the tuner 101 tunes in to the physical channel in accordance with the tuning signal (step S2).

Then, the receiving intensity detector 109 (Fig. 1) determines whether or not the tuner 101 is receiving a broadcasting signal of the physical channel tuned in to (step S3).

When it is determined that the broadcasting signal is being received, the receiving intensity detector 109 detects a receiving intensity (step S4).

Then, the receiving intensity detector 109 determines a receivable hierarchy on the basis of the detected receiving intensity. Specifically, the receiving intensity detector 109 determines that broadcasting signals in both a low hierarchy and a high hierarchy are receivable when the receiving intensity is not less than a predetermined threshold value on the physical channel that is being tuned in to, while determining that only the broadcasting signal in the low hierarchy is receivable when the receiving intensity is less than the predetermined threshold value.

Then, the determiner 110 (Fig. 1) acquires service list data from the TS decoder 103 (Fig. 1) (step S6).

Then, the determiner 110 selects one of services in the acquired service list data (step S7).

Then, the determiner 110 determines a hierarchy in which the service selected in the step S7 is broadcast on the basis of hierarchical information (see Fig. 2) in the service list data acquired in the step S6 (step S8).

Then, the determiner 110 compares the receivable hierarchy determined in the step S5 with the hierarchy determined in the step S8, and determines whether or not the service selected in the step S7 is receivable (step S9).

When the hierarchy that has been determined to be receivable in the step S5 is the low hierarchy and the high hierarchy, and the service selected in the step S7 is a television broadcast 1 (ID number : 101) shown in Fig. 2, for example, the determiner 110 determines that the selected service is receivable.

When the hierarchy that has been determined to be receivable in the step S5 is only the low hierarchy, and the service selected in the step S7 is the television broadcast 1 (ID number : 101) shown in Fig. 2, for example, the determiner 110 determines that the selected service is unreceivable.

When it is determined in the step S8 that the service is receivable, the determiner 110 stores an ID number for specifying the service in the service list storage 111 (Fig. 1) (step S10).

Then, the determiner 110 determines whether or not the processes in the foregoing step S7 to S10 are terminated for all services (five services in Fig. 2) in the service list data acquired in the step S6 (step S11).

When it is determined in the step S9 that the processes are terminated for all the services, the controller 112 (Fig. 1) determines whether or not the processes in the steps S1 to S11 are terminated for all physical channels stored in the storage (step S12).

When it is determined in the step S12 that the processes in the steps S1 to S11 are terminated for all the physical channels, the channel scan operation is terminated.

When it is determined in the step S3 that the broadcasting signal is not being received, the controller 112 proceeds to the step S12.

When it is determined in the step S9 that the service is unreceivable, the determiner 110 proceeds to the step S11.

When it is determined in the step S11 that the processes are not terminated for all the services, i.e., any of the services have not been determined to be receivable or unreceivable, the determiner 110 returns to the step S7, to select one of the services that have not been determined to be receivable or unreceivable.

When it is determined in the step S12 that the processes in the steps S1 to S12 are not terminated for all the physical channels, that is, when any one of the physical channels has not been scanned, the controller 112 returns to the step S1, to generate a tuning signal for designating the subsequent physical channel in accordance with the order stored in the storage and output the generated tuning signal to the tuner 101.

When the television receiver 100 can receive the broadcasting signals in the high hierarchy and the low hierarchy, for example, by the foregoing processes, all ID numbers in the service list data are stored in the service list storage 111. In the example of Fig. 2, "101", "102", "301", "701", and "901" are stored as ID numbers in the service list storage 111.

When the television receiver 100 can receive only the broadcasting signal in the low hierarchy, for example, only the ID number for specifying the service assigned hierarchical information representing the low hierarchy is stored in the service list storage 111. In the example of Fig. 2, "701" and "901" are stored as ID numbers in the service list storage 111.

### (c) Effects of the present embodiment

As described in the foregoing, in the television receiver 100 according to the present embodiment, the receiving intensity of the physical channel that is being tuned in to is detected when the channel scan is performed. Furthermore, the receivable hierarchy on the physical channel that is being tuned in to is determined on the basis of the detected receiving intensity. It is determined for each of the services whether or not the service is receivable by comparing the results of the determination with the hierarchical information in the service list data, and the ID number for specifying the service that has been determined to be receivable is stored in the service list storage 111.

In this case, even if each of the broadcasting stations transmits the service list data with the service list data multiplexed on the broadcasting signal in the low hierarchy, only the ID number for specifying the receivable service is stored in the service list storage 111. When the television receiver 100 cannot receive the broadcasting signal in the high hierarchy, therefore, it is possible to prevent the ID number for specifying the service broadcast in the high hierarchy from being stored in the service list storage 111.

In the present embodiment, the viewer can select only the service corresponding to the ID number stored in the service list storage 111. When the viewer performs an up-and-down operation with the remote control 902, for example, the unreceivable service is not selected. This allows a time period required to select the service to be shortened.

When the television receiver 100 is so set that the service can be selected by inputting the ID number with the remote control 902 or the input unit 113, for example, it is possible to immediately indicate, when the viewer inputs the ID number for specifying the unreceivable service, that the service is unreceivable using the display device. This allows the viewer to easily and immediately recognize the unreceivable service.

In the present embodiment, the electronic program guide data can be edited on the basis of the ID numbers stored in the service list storage 111. When the viewer displays the electronic program guide on the display device, therefore, it is possible to prevent the unreceivable service from being incorporated into the electronic program guide. This can prevent the viewer from selecting the unreceivable service. Furthermore, only the receivable service is incorporated into the electronic program guide. Therefore, the viewer can easily find out the desired service.

As a result of the foregoing, the viewer can perform a comfortable tuning operation.

Furthermore, each of the broadcasting stations can transmit the service list data with the service list data multiplexed on the broadcasting signal in the low hierarchy. Therefore, the television receiver 100 can be caused to reliably receive the service list data.

### (2) Second Embodiment

A television receiver according to a second embodiment differs from the television receiver 100 (Fig. 1) according to the first embodiment in the following points.

### (a) Configuration of television receiver

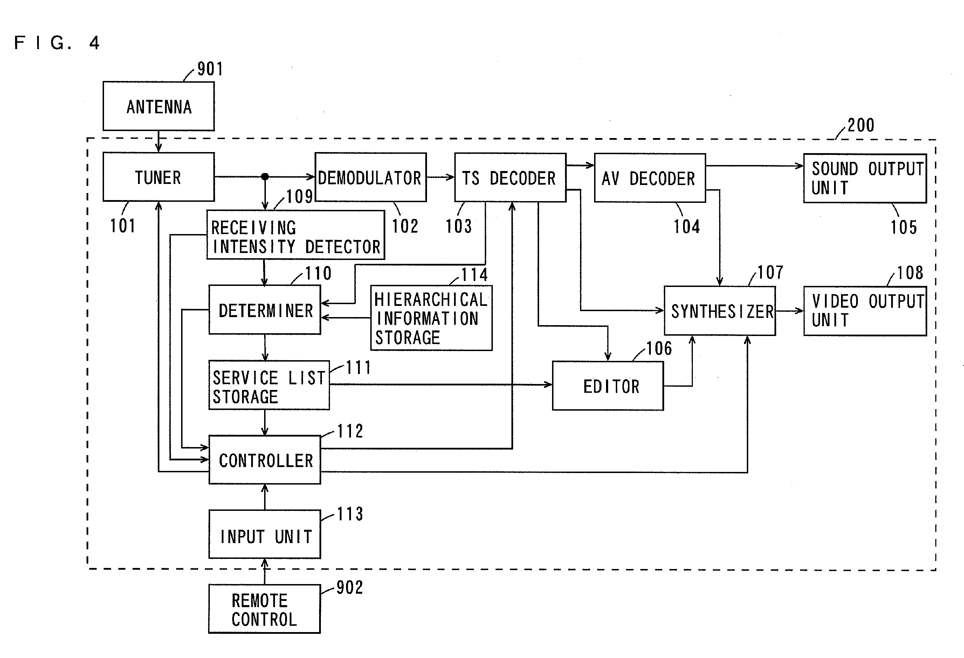

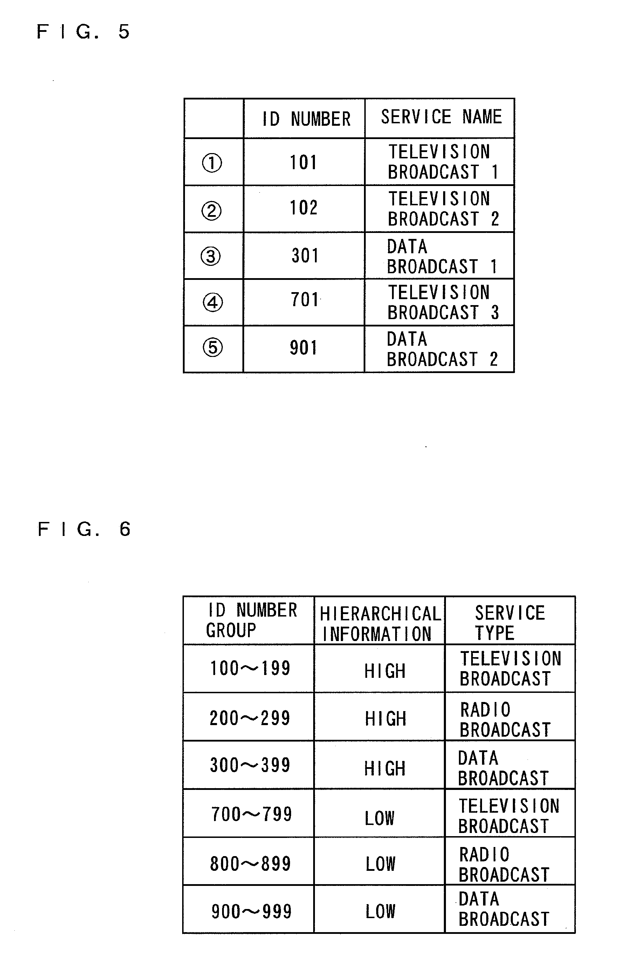

Fig. 4 is a block diagram showing the configuration of the television receiver according to the second embodiment. Fig. 5 is a schematic view showing an example of service list data transmitted from each of broadcasting stations. Note that the service list data does not include hierarchical information in the present embodiment, as shown in Fig. 5.

As shown in Fig. 4, a television receiver 200 according to the present embodiment includes a hierarchical information storage 114.

The hierarchical information storage 114 stores information representing the relationship between an ID number and a hierarchy (hereinafter referred to as by-ID hierarchical information). Note that the relationship between an ID number and a hierarchy is previously determined by a broadcasting standard. Fig. 6 shows an example of the by-ID hierarchical information. Note that a predetermined number of (100 in this example) ID numbers are assigned for each combination of a hierarchy and a service type in the example of Fig. 6. For example, an ID number assigned to a television broadcast in a high hierarchy is set to any one of ID numbers in an ID number group "100 to 199", and an ID number assigned to a television broadcast in a low hierarchy is set to any one of ID numbers in an ID number group "700 to 799".

### (b) Channel scan

A channel scan in the present embodiment will be then described.

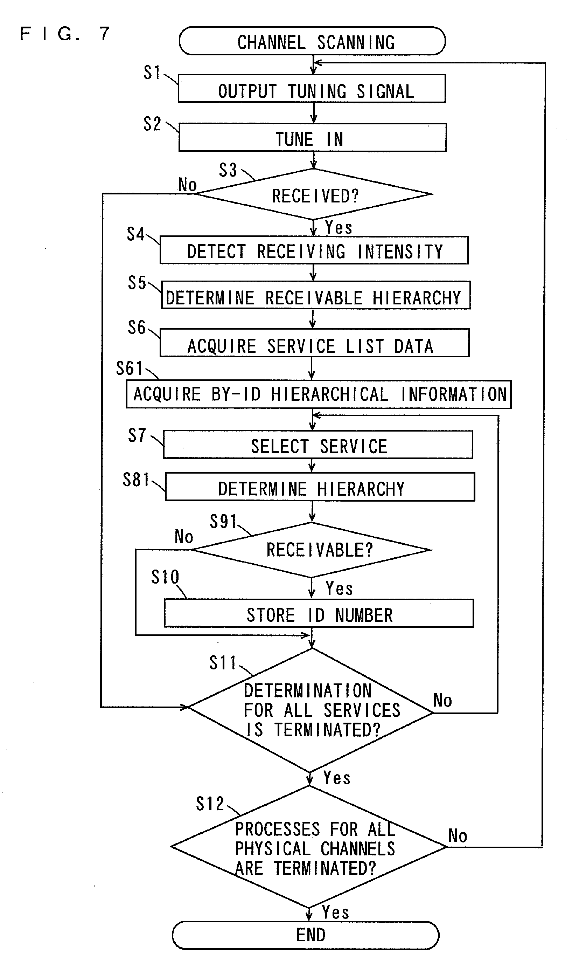

Fig. 7 is a flow chart showing a channel scan operation of the television receiver 200 (Fig. 4). The flow chart shown in Fig. 7 differs from the flow chart shown in Fig. 3 in the following points.

As shown in Fig. 7, a determiner 110 (Fig. 4) acquires service list data in the step S6, and then acquires by-ID hierarchical information from the hierarchical information storage 114 (Fig. 4) (step S61).

Then, the determiner 110 selects one of services in the service list data acquired in the step S6 (step S7).

Then, the determiner 110 determines a hierarchy in which the service selected in the step S7 is broadcast on the basis of the by-ID hierarchical information acquired in the step S61 (step S8).

For example, when the service selected in the step S7 is a data broadcast 1 (Fig. 5), an ID number assigned to the data broadcast 1 is "301". In this case, the ID number "301" is included in an ID number group "300∼399" in the by-ID hierarchical information (Fig. 6). Therefore, the determiner 110 determines that a hierarchy in which the data broadcast 1 is broadcast is a high hierarchy.

Then, the determiner 110 compares a receivable hierarchy determined in the step S5 with the hierarchy determined in the step S81, and determines whether or not the service selected in the step S7 is receivable (step S91).

The determiner 110 proceeds to the step S10 when it determines in the step S91 that the service is receivable, while proceeding to the step S11 when it determines in the step S91 that the service is unreceivable. Note that other processes are the same as those shown in Fig. 4.

When the television receiver 200 can receive broadcasting signals in a high hierarchy and a low hierarchy, for example, by the foregoing processes, all ID numbers in the service list data (see Fig. 5) are stored in a service list storage 111.

When the television receiver 200 can receive only the broadcasting signal in the low hierarchy, for example, only the ID number belonging to the ID number group (Fig. 6) in the low hierarchy out of the ID numbers in the service list data (see Fig. 5) is stored in the service list storage 111. In the examples of Figs. 5 and 6, "701" and "901" are stored as ID numbers in the service list storage 111.

### (c) Effects of the present embodiment

As described in the foregoing, in the television receiver 200 according to the present embodiment, the receiving intensity of the physical channel that is being tuned in to is detected when the channel scan is performed. Furthermore, the receivable hierarchy on the physical channel that is being tuned in to is determined on the basis of the detected receiving intensity. It is determined for each of the services whether or not the service is receivable by comparing the results of the determination with the by-ID hierarchical information stored in the hierarchical information storage 114, and the ID number for specifying the service that has been determined to be receivable is stored in the service list storage 111.

In this case, even if each of the broadcasting stations transmits the service list data with the service list data multiplexed on the broadcasting signal in the low hierarchy, only the ID number for specifying the receivable service is stored in the service list storage 111. When the television receiver 200 cannot receive the broadcasting signal in the high hierarchy, therefore, it is possible to prevent the ID number for specifying the service broadcast in the high hierarchy from being stored in the service list storage 111.

The viewer can select only the service corresponding to the ID number stored in the service list storage 111. This allows a time period required to select the service to be shortened.

Furthermore, the electronic program guide data can be edited on the basis of the ID numbers stored in the service list storage 111. This can prevent the unreceivable service from being incorporated into the electronic program guide.

As a result of the foregoing, the viewer can perform a comfortable tuning operation.

Furthermore, each of the broadcasting stations can transmit the service list data with the service list data multiplexed on the broadcasting signal in the low hierarchy. Therefore, the television receiver 200 can be caused to reliably receive the service list data.

In the present embodiment, even if no hierarchical information is included in the service list data transmitted by each of the broadcasting stations, the hierarchy in which each of the service is broadcast can be recognized on the basis of the by-ID hierarchical information. Therefore, each of the broadcasting stations need not provide hierarchical information to the service list data. This allows the other information to be multiplexed on the broadcasting signal, thereby making it feasible to diversify broadcasting.

### (3) Third Embodiment

A television receiver according to a third embodiment differs from the television receiver 100 (Fig. 1) according to the first embodiment in the following points.

### (a) Configuration of television receiver

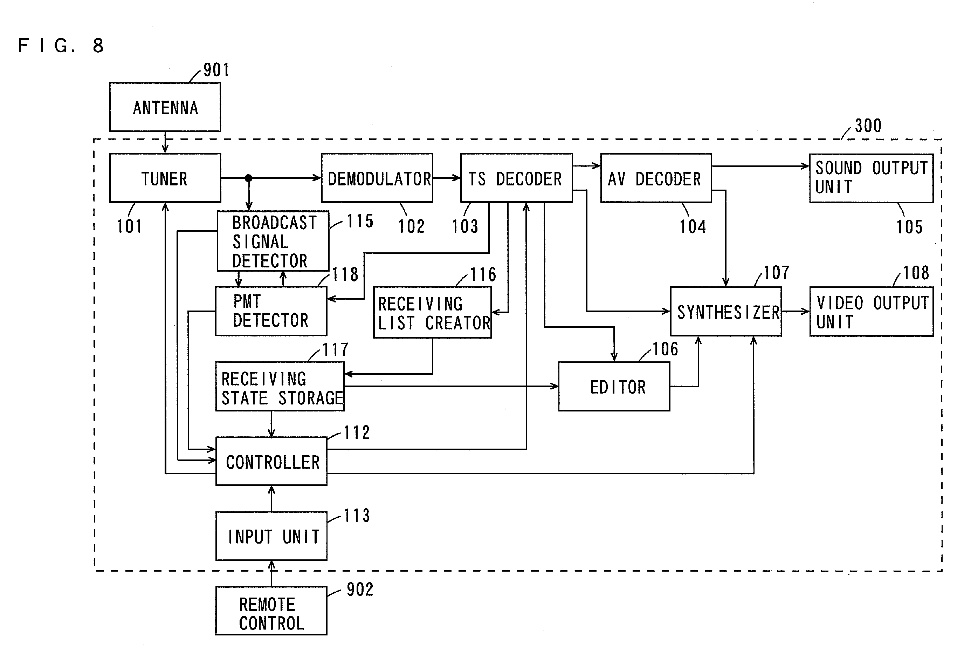

Fig. 8 is a block diagram showing the configuration of the television receiver according to the third embodiment. Note that the service list data shown in Fig. 5 shall be transmitted from each of broadcasting stations in the present embodiment.

As shown in Fig. 8, a television receiver 300 according to the present embodiment includes a broadcasting signal detector 115, a receiving list creator 116, a receiving state storage 117, and a PMT detector 118. Note that the receiving intensity detector 109, the determiner 110, and the service list storage 111 shown in Fig. 1 are not included in the television receiver 300 according to the present embodiment.

In the present embodiment, a TS decoder 103 separates a sound stream, a video stream, electric program guide data, data broadcast-related data, service list data, and a PMT (Program Map Table) from a transport stream outputted from a demodulator 102. The TS decoder 103 outputs the separated service list data to the receiving list creator 116, and outputs the separated PMT to the PMT detector 118. Note that the PMT is a table representing constituent elements (a video stream, a sound stream, a data stream, etc.) in each of services, and is transmitted in the same hierarchy as constituent elements in the corresponding service.

The broadcasting signal detector 115 determines whether or not a broadcasting signal of a physical channel that is being tuned in to by a tuner 101 is being received, similarly to the receiving intensity detector 109 shown in Fig. 1. Furthermore, the broadcasting signal detector 115 outputs, when it determines that the tuner 101 is not receiving the broadcasting signal of the physical channel that is being tuned in to by the tuner 101, a third notification signal for notifying a controller 112 of the results of the determination.

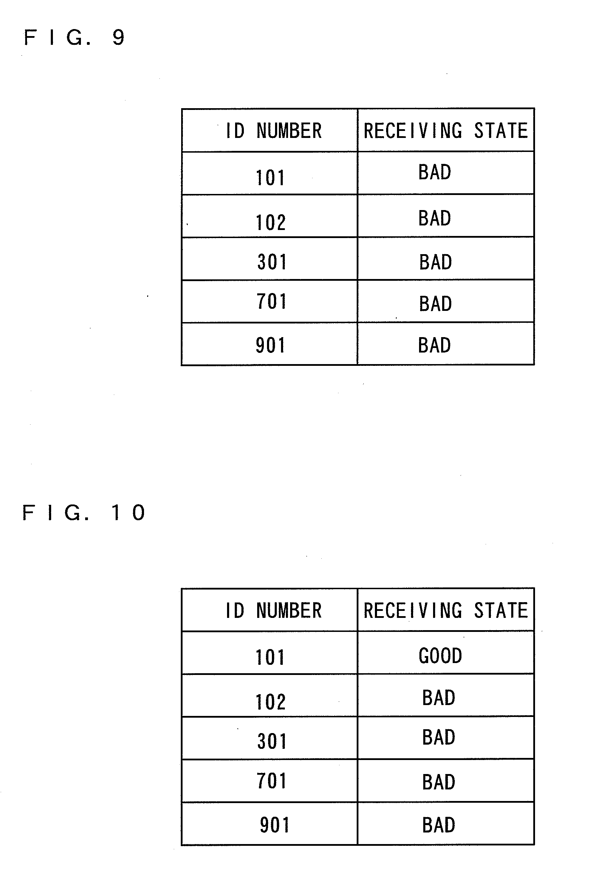

The receiving list creator 116 creates a receiving list on the basis of the service list data outputted from the TS decoder 103. Fig. 9 shows an example of a receiving list in an initial state. Note that the example of Fig. 9 shows a receiving list created on the basis of the service list data shown in Fig. 5. As shown in Fig. 9, the receiving list represents the relationship between an ID number for specifying each of services and the receiving state of the service. As shown in Fig. 9, the receiving list creator 116 creates a receiving list, considering that the receiving states of all the services are unreceivable states (states displayed as "bad" in Fig. 9) in the initial state.

The receiving state storage 117 stores the receiving list created by the receiving list creator 116.

The PMT detector 118 detects the PMT outputted from the TS decoder 103 while determining the receiving state of each of the services on the basis of the detected PMT. Specifically, the PMT detector 118 determines, when it detects the PMT, that the service corresponding to the PMT is receivable, and changes the receiving state in the receiving list stored in the receiving state storage 117.

Fig. 10 is an example of a receiving list in which the receiving state of each of services has been changed. The PMT detector 118 changes, when it determines that a television broadcast 1 (ID number : 101) shown in Fig. 5 is receivable, for example, the receiving state of a service assigned the ID number 101 to a receivable state (a state displayed as "good" in Fig. 10) on the receiving list, as shown in Fig. 10.

Furthermore, the PMT detector 118 outputs, when the receiving state has been determined for all the services in the receiving list, a fourth notification signal for notifying the controller 112 of the results of the determination.

In the present embodiment, the controller 112 outputs, when the above-mentioned third or fourth notification signal is outputted from the broadcasting signal detector 115 or the PMT detector 118, a tuning signal for designating a physical channel different from a physical channel that is being tuned in to the tuner 101.

Furthermore, an editor 106 edits the electronic program guide data outputted from the TS decoder 103 on the basis of the ID number for specifying the service that is made receivable in the receiving list stored in the receiving list creator 117, and outputs the edited electronic program guide data to a synthesizer 107. Specifically, the editor 106 creates the electronic program guide data including only the service that has been determined to be receivable.

Furthermore, the controller 112 generates a designation signal only for the service that is made receivable in the receiving list.

Note that the broadcasting signal detector 115, the receiving list creator 116, and the PMT detector 118 may be realized by a microcomputer and its control program. Alternatively, any one or all of them may be realized by hardware such as an electronic circuit.

### (b) Channel scan

A channel scan operation in the present embodiment will be then described.

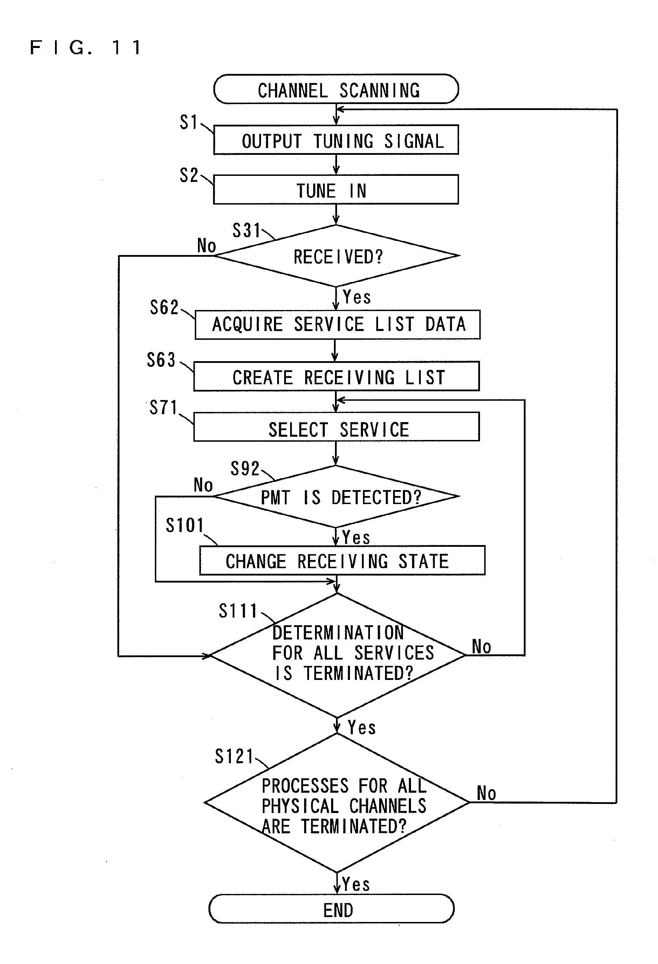

Fig. 11 is a flow chart showing a channel scan operation of the television receiver 300 (Fig. 8). The flow chart shown in Fig. 11 differs from the flow chart shown in Fig. 3 in the following points.

As shown in Fig. 11, after the tuner 101 tunes in to a physical channel in the step S2, the broadcasting signal detector 115 (Fig. 8) determines whether or not the tuner 101 is receiving a broadcasting signal of the physical channel tuned in to (step S31).

The receiving list creator 116 (Fig. 8) acquires, when it is determined that the broadcasting signal is being received, service list data from the TS decoder 103 (Fig. 8) (step S62).

Then, the receiving list creator 116 (Fig. 8) creates a receiving list on the basis of the acquired service list data, and stores the created receiving list in the receiving state storage 117 (Fig. 8) (step S63).

Then, the PMT detector 118 (Fig. 8) selects one service (ID number) from the receiving list stored in the receiving state storage 117 (step S71).

Then, the PMT detector 118 determines whether or not a PMT corresponding to the selected service (ID number) is detected (step S92).

When the PMT is detected, the PMT detector 118 changes the receiving state of the service selected in the step S71 to a receivable state in the receiving list stored in the receiving list storage 117 (step S101).

Then, the PMT detector 118 determines whether or not the processes in the foregoing step S71 to S101 are terminated for all the services in the receiving list created in the step S63 (step S111).

When it is determined in the step S111 that the processes are terminated for all the services, the controller 112 (Fig. 8) determines whether or not the processes in the steps S1 to S111 are terminated for all physical channels stored in the storage (step S121).

When it is determined in the step S31 that the broadcasting signal is not being received, the controller 112 proceeds to the step S121.

When the PMT is not detected in the step S92, the PMT detector 118 proceeds to the step S111 without changing the receiving state in the receiving list.

When it is determined in the step S111 that the processes are not terminated for all the services, i.e., when any of the services have not been determined to be receivable or unreceivable, the PMT detector 118 returns to the step S71, to select one of the services that have not been determined.

When it is determined in the step S121 that the processes in the steps S1 to S111 are not terminated for all the physical channels, that is, when any one of the physical channels has not been scanned, the controller 112 returns to the step S1, to generate a tuning signal for designating the subsequent physical channel in accordance with the order stored in the storage and output the generated tuning signal to the tuner 101.

### (c) Effects of the present embodiment

As described in the foregoing, in the television receiver 300 according to the present embodiment, it is determined that only the service corresponding to the received PMT is receivable when the channel scan is performed. When the television receiver 300 cannot receive only the broadcasting signal in the high hierarchy, therefore, it is possible to prevent the service broadcast in the high hierarchy from being determined to be receivable.

The viewer can select only the service that has been determined to be receivable. This allows a time period required to select the service to be shortened.

Furthermore, the electronic program guide data can be created on the basis of the ID number for specifying the service that has been determined to be receivable. This can prevent the unreceivable service from being incorporated into the electronic program guide.

As a result of the foregoing, the viewer can perform a comfortable tuning operation.

Furthermore, each of the broadcasting stations can transmit the service list data with the service list data multiplexed on the broadcasting signal in the low hierarchy. Therefore, the television receiver 300 can be caused to reliably receive the service list data.

The television receiver 300 according to the present embodiment can specify the receivable service without determining the receivable hierarchy. Therefore, the necessity of measuring the receiving intensity of the broadcasting signal is eliminated, thereby allowing the constituent elements in the television receiver 300 to be simplified. This allows the manufacturing processes and the manufacturing cost of the television receiver 300 to be reduced.

### (4) Fourth Embodiment

A television receiver according to a fourth embodiment differs from the television receiver 300 (Fig. 8) according to the third embodiment in the following points.

### (a) Configuration of television receiver

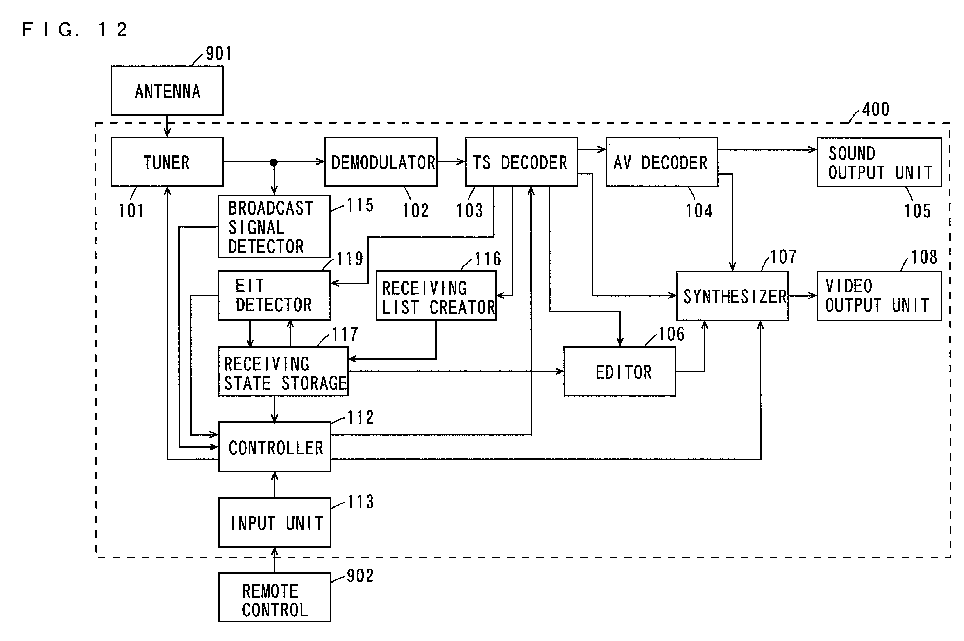

Fig. 12 is a block diagram showing the configuration of the television receiver according to the fourth embodiment.

As shown in Fig. 12, a television receiver 400 according to the present embodiment has an EIT detector 119 provided in place of the PMT detector 118 shown in Fig. 8.

In the present embodiment, a TS decoder 103 separates a sound stream, a video stream, electric program guide data, data broadcast-related data, service list data, and an EIT (Event Information Table) from a transport stream outputted from a demodulator 102. The TS decoder 103 outputs the separated service list data to a receiving list creator 116, and outputs the separated EIT to the EIT detector 119. Note that the EIT is a table representing program information relating to each of services, and is transmitted in the same hierarchy as constituent elements (a video stream, a sound stream, a data stream, etc.) in the corresponding service.

The EIT detector 119 detects the EIT outputted from the TS decoder 103 while determining the receiving state of each of the services on the basis of the detected EIT. More specifically, the EIT detector 119 detects, when it detects the EIT, that the service corresponding to the EIT is receivable, and changes the receiving state in a receiving list stored in a receiving state storage 117, similarly to the PMT detector 118 shown in Fig. 8.

Furthermore, the EIT detector 119 outputs, when the receiving state has been determined for all the services in the receiving list, a fifth notification signal for notifying a controller 112 of the results of the determination.

In the present embodiment, the controller 112 outputs, when the above-mentioned third or fifth notification signal is outputted from a broadcasting signal detector 115 or the EIT detector 119, a tuning signal for designating a physical channel different from a physical channel that is being tuned in to to a tuner 101.

Note that the EIT detector 119 may be realized by a microcomputer and its control program or may be realized by hardware such as an electronic circuit.

### (b) Channel scan

A channel scan operation in the present embodiment will be then described.

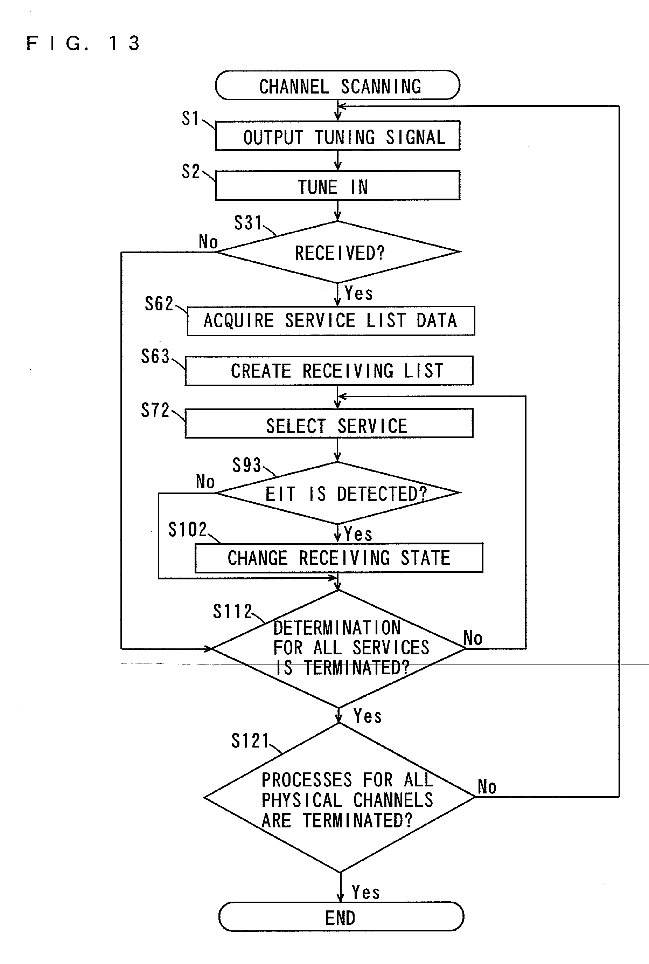

Fig. 13 is a flow chart showing a channel scan operation of the television receiver 400 (Fig. 12). The flow chart shown in Fig. 13 differs from the flow chart shown in Fig. 11 in the following points.

As shown in Fig. 13, the receiving list creator 116 (Fig. 12) creates a receiving list in the step S63, the created receiving list (Fig. 9) is stored in the receiving state storage 117 (Fig. 12), and the EIT detector 119 (Fig. 12) then selects one of services (ID numbers) in the stored receiving list (step S72).

Then, the EIT detector 119 determines whether or not an EIT corresponding to the selected service (ID number) is detected (step S93).

When the EIT is detected, the EIT detector 119 changes the receiving state of the service selected in the step S72 to a receivable state in the receiving list stored in the receiving list storage 117 (step S102).

Then, the EIT detector 119 determines whether or not the processes in the foregoing step S72 to S102 are terminated for all the services in the receiving list created in the step S63 (step S112).

When it is determined that the processes are terminated for all the services, the controller 112 (Fig. 12) proceeds to the step S121.

When it is determined in the step S93 that the EIT is not detected, the EIT detector 119 proceeds to the step S112 without changing the receiving state in the receiving list.

When it is determined in the step S112 that the processes are not terminated for all the services, i.e., when any of the services have not been determined to be receivable or unreceivable, the EIT detector 119 returns to the step S72, to select one of the services that have not been determined.

### (c) Effects of the present embodiment

As described in the foregoing, in the television receiver 400 according to the present embodiment, it is determined that only the service corresponding to the received EIT is receivable when the channel scan is performed. When the television receiver 400 cannot receive a broadcasting signal in a high hierarchy, therefore, it is possible to prevent the service broadcast in the high hierarchy from being determined to be receivable.

The viewer can select only the service that has been determined to be receivable. This allows a time period required to select the service to be shortened.

Furthermore, the electronic program guide data can be created on the basis of the ID number for specifying the service that has been determined to be receivable. This can prevent the unreceivable service from being incorporated into an electronic program guide.

As a result or the foregoing, the viewer can perform a comfortable tuning operation.

Furthermore, each of the broadcasting stations can transmit the service list data with the service list data multiplexed on a broadcasting signal in a low hierarchy. Therefore, the television receiver 400 can be caused to reliably receive the service list data.

The television receiver 400 according to the present embodiment can specify a receivable service without determining a receivable hierarchy. Therefore, the necessity of measuring the receiving intensity of the broadcasting signal is eliminated, thereby allowing the constituent elements in the television receiver 400 to be simplified. This allows the manufacturing processes and the manufacturing cost of the television receiver 400 to be reduced.

Generally, the EIT is also transmitted when the broadcasting of the corresponding service is stopped. In the present embodiment, therefore, the television receiver 400 can determine that the service whose broadcasting is temporarily stopped is also receivable. This can prevent the television receiver 400 from determining the service that is made receivable by resuming the broadcasting to be unreceivable. As a result, it is possible to more reliably determine the receivable service.

### (5) Fifth Embodiment

A television receiver according to a fifth embodiment differs from the television receivers 300 and 400 (Figs. 8 and 12) according to the third and fourth embodiments in the following points.

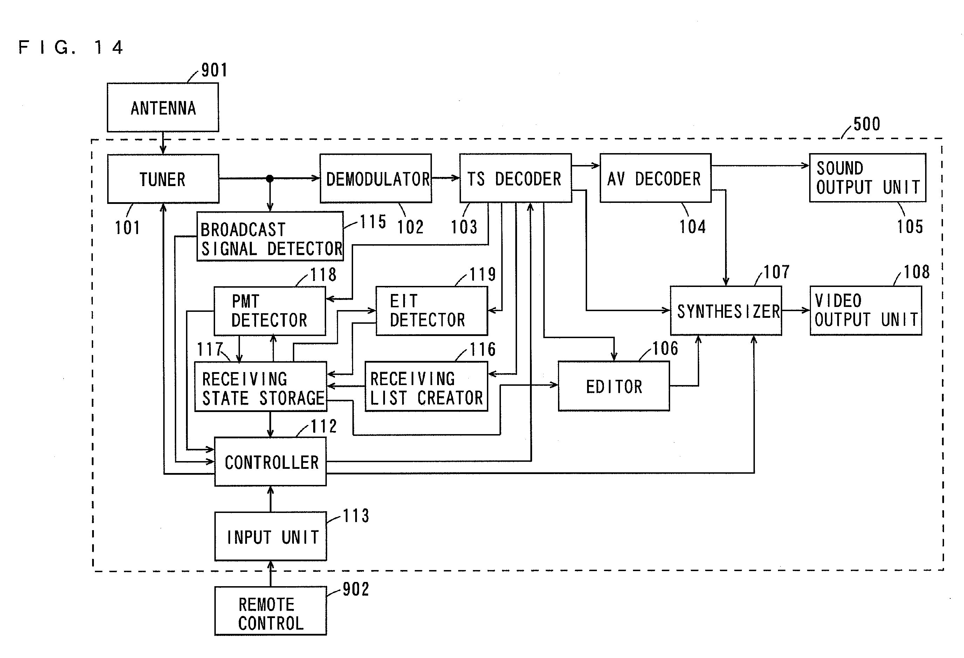

Fig. 14 is a block diagram showing the configuration of the television receiver according to the fifth embodiment.

As shown in Fig. 14, a television receiver 500 according to the present embodiment is provided with both a PMT detector 118 shown in Fig. 8 and an EIT detector 119 shown in Fig. 12.

In the present embodiment, a TS decoder 103 separates a sound stream, a video stream, electric program guide data, data broadcast-related data, service list data, a PMT, and an EIT from a transport stream outputted from a demodulator 102. Furthermore, the TS decoder 103 outputs the separated service list data to a receiving list creator 116, outputs the separated PMT to the PMT detector 118, and outputs the separated EIT to the EIT detector 119.

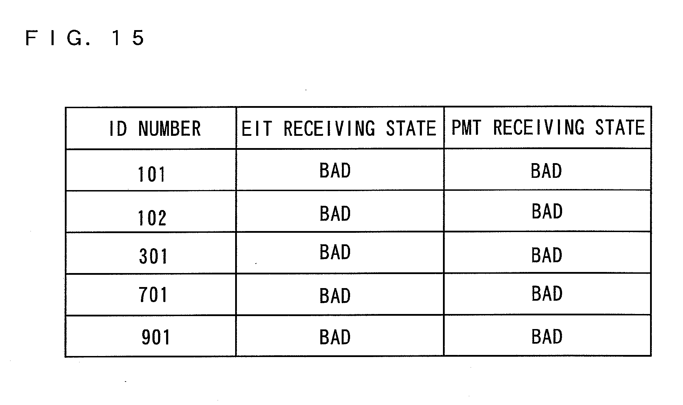

Fig. 15 is a schematic view showing an example of a receiving list in an initial state created by a receiving list creator 116 in the present embodiment. As shown in Fig. 15, the receiving list includes an ID number for specifying each of services and the receiving states of the EIT and the PMT corresponding to the service in the present embodiment. Note that the receiving list creator 116 creates the receiving list, considering that neither the EIT nor the PMT is received in the initial state.

The PMT detector 118 changes, when it detects the PMT outputted from the TS decoder 103, a corresponding PMT receiving state in a receiving list stored in a receiving state storage 117 into a receivable state.

The EIT detector 119 changes, when it detects the EIT outputted from the TS decoder 103, a corresponding EIT receiving state in the receiving list stored in the receiving state storage 117 into a receivable state.

Note that the PMT detector 118 and the EIT detector 119 determine the receiving state by the same operation as the operation described in the flow charts shown in Figs. 10 and 13.

Generally, the PMT is not transmitted when the broadcasting of the corresponding service is stopped. On the other hand, the EIT is also transmitted when the broadcasting of the corresponding service is stopped.

Therefore, in the present embodiment, a controller 112 and an editor 106 determine the service in which the EIT is received to be receivable, determine the service in which not the PMT but the EIT is received as a service whose broadcasting is stopped, and determine the service in which neither the EIT nor the PMT is received to be unreceivable.

That is, in the present embodiment, it can be determined whether the service that is not currently received is unreceivable or is receivable, though the broadcasting thereof is stopped. This can prevent the service whose broadcasting is stopped from being determined to be unreceivable.

In this case, the editor 106 can indicate, for the service whose broadcasting is stopped, that broadcasting is stopped in an electronic program guide because it edits the electronic program guide data on the basis of the receiving list stored in the receiving state storage 117. This allows a viewer to more accurately recognize the receivable service.

Furthermore, the controller 112 can be so set that a designation signal is generated only for the service that has been determined to be being broadcast, for example. In this case, the viewer can select only the service that is being broadcast. This allows a time period required to select the service to be shortened.

Furthermore, when the viewer selects the service whose broadcasting is stopped, for example, it can be indicated on a display device that the broadcasting of the service is stopped. This allows the viewer to more accurately recognize the receiving state of the service.

As a result of the foregoing results, the viewer can perform a more comfortable tuning operation.

### (6) Other configurations

Although in the above-mentioned embodiments, description was made of the case where the digital broadcasting receiver is a television receiver, the digital broadcasting receiver may be a mobile receiver such as a cellular phone, a car television, a car navigation system, or a PDA (Personal Digital Assistant). Furthermore, the digital broadcasting receiver 10 may be a personal computer or the like including a DVD (Digital Versatile Disc) reproducing apparatus, a DVD recording/reproducing apparatus, a hard disk recording/reproducing apparatus, a set top box (STB), or a digital tuner. In this case, the sound output unit 105 has not a sound output device but a sound output terminal, and the video output unit 108 has not a video display device but a video output terminal. The sound output terminal and the video output terminal are connected to a sound input terminal and a video input terminal of the television receiver. Alternatively, the sound output terminal and the video output terminal are respectively connected to a sound input terminal and a video input terminal of a display panel.

Although in the above-mentioned embodiments, description was made of the case where each of the broadcasting stations is doing a broadcast using two different modulation systems, receivable services can be determined by the same configuration even when each of the broadcasting stations is doing a broadcast using three or more different modulation systems.

Although in the above-mentioned embodiments, the receiving intensity detector 109 and the broadcasting signal detector 115 detect the broadcasting signal outputted from the tuner 101, to determine whether or not the tuner 101 is receiving the broadcasting signal, they may determine on the basis of the level of the broadcasting signal outputted from the tuner 101 whether or not the tuner 101 is receiving the broadcasting signal.

For example, they may determine that the tuner 101 is receiving the broadcasting signal when the level of the broadcasting signal outputted from the tuner 101 is not less than a predetermined threshold value, while determining that the tuner 101 is not receiving the broadcasting signal when the level of the broadcasting signal outputted from the tuner 101 is less than the predetermined threshold value. Note that a limit value at which the broadcasting signal in the low hierarchy is receivable, for example, can be used as the threshold value.

Although in the above-mentioned embodiments, the receiving intensity is detected by the level of the broadcasting signal, the receiving intensity may be detected on the basis of a C/N (Carrier to Noise ratio) or may be detected on the basis of an error rate at the time of demodulation in the demodulator 102 or the AV decoder 104.

### (7) Correspondences between constituent elements in claims and parts in embodiments

In the following paragraphs, non-limiting examples of correspondences between various elements recited in the claims below and those described above with respect to various embodiments of the present invention are explained.

In the embodiments described above, the tuner 101 is an example of a receiver, the demodulator 102 is an example of a demodulator, the service list data is an example of list information of services, the TS decoder 103 is an example of an extractor, the receiving intensity detector 109 is an example of a hierarchy determiner, the determiner 110, the PMT detector 118, or the EIT detector 119 is an example of a separator, the controller 112 is an example of a selector, the hierarchical information is an example of information relating to a hierarchy in which a service is broadcast, the ID number is an example of information for specifying a service, the by-ID hierarchical information is an example of the relationship between information for specifying a service and a hierarchy, the hierarchical information storage 114 is an example of a storage, the determiner 110 is an example of a determiner, and the control 112 is an example of a receiving state determiner.

### [Industrial Applicability]

The present invention is applicable to various types of digital broadcasting receiving apparatuses having general digital broadcasting receiving functions such as a television receiver, a personal computer, a DVD decoder, and a cellular phone.

A television receiver includes a TS decoder, an editor, a receiving intensity detector, a determiner, and a service list storage. The TS decoder separates electronic program guide data, service list data, and so on from a transport stream. The receiving intensity detector detects the receiving intensity of a physical channel that is being tuned in to, and determines a receivable hierarchy. The determiner determines whether or not each of services in a service list is receivable on the basis of the results of the determination by the receiving intensity detector, and stores an ID number for specifying the service that has been determined to be receivable in the service list storage. The editor generates electronic program guide data including only the receivable service on the basis of the electronic program guide data separated by the TS decoder and the ID number stored in the service list storage.

## Claims

1. A digital broadcasting receiver that receives a broadcasting signal hierarchically modulated, comprising:
a receiver that receives respective broadcasting signals in a plurality of frequency bands;
a demodulator that demodulates a transport stream from the broadcasting signal received by said receiver;
an extractor that extracts list information of services broadcast in each of the frequency bands from the transport stream demodulated by said demodulator;
a hierarchy determiner that determines, on the basis of the state of the broadcasting signal received by said receiver, a receivable hierarchy of the broadcasting signal;
a separator that separates the services broadcast in the receivable hierarchy from the list information extracted by said extractor on the basis of the results of the determination by said hierarchy determiner; and
a selector that selects, out of the services separated by said separator, the service on the basis of a user's operation.

2. The digital broadcasting receiver according to claim 1, wherein said hierarchy determiner detects the receiving intensity of the broadcasting signal by said receiver as the state of the broadcasting signal, and determines the receivable hierarchy of the broadcasting signal on the basis of the detected receiving intensity.

3. The digital broadcasting receiver according to claim 2, wherein said hierarchy determiner detects at least one of the level, the carrier-to-noise ratio, and the error rate of the broadcasting signal received by said receiver, to detect the receiving intensity.

4. The digital broadcasting receiver according to claim 1, wherein
said list information includes information relating to the hierarchy in which each of the services is broadcast, and
said separator separates the services broadcast in the receivable hierarchy from said list information on the basis of said information relating to the hierarchy and the results of the determination by said hierarchy determiner.

5. The digital broadcasting receiver according to claim 1, wherein
said list information includes information for specifying each of the services,
said digital broadcasting receiver further comprises
a storage that stores the relationship between the information for specifying said service and the hierarchy, and
a determiner that determines the hierarchy in which each of the services is broadcast in said list information on the basis of said relationship stored in said storage, and
said separator separates the services broadcast in the receivable hierarchy from said list information on the basis of the hierarchy, in which each of the services is broadcast, determined by said determiner and the results of the determination by said hierarchy determiner.

6. A digital broadcasting receiver that receives a broadcasting signal hierarchically modulated, comprising:
a receiver that receives respective broadcasting signals in a plurality of frequency bands;
a demodulator that demodulates a transport stream from the broadcasting signal received by said receiver;
an extractor that extracts list information of services broadcast in each of the frequency bands and information relating, for each of the services, to the service multiplexed on the broadcasting signal from the transport stream demodulated by said demodulator;
a separator that separates the services corresponding to the information relating to the service extracted by said extractor from the list information extracted by said extractor; and
a selector that selects, out of the services separated by said separator, the service on the basis of a user's operation.

7. The digital broadcasting receiver according to claim 6, wherein the information relating to said service is a program map table.

8. The digital broadcasting receiver according to claim 6, wherein the information relating to said service is an event information table.

9. The digital broadcasting receiver according to claim 6, wherein the information relating to said service includes the program map table and the event information table, further comprising
a receiving state determiner that determines the receiving state of said service,
said receiving state determiner
determining that said receiver can receive the service corresponding to the program map table and the event information table and the service is being broadcast when said extractor extracts said program map table and said event information table, and
determining that said receiver can receive the service corresponding to the event information table and the broadcasting of the service is stopped when said extractor extracts not the program map table but the event information table.
